# EUROPÄISCHE PATENTSCHRIFT

(11) **EP 0 578 039 B1**
(45) Veröffentlichungstag und Bekanntmachung des Hinweises auf die Patenterteilung: **29.01.1997**
(21) Anmeldenummer: 93109871.9
(22) Anmeldetag: 21.06.1993
(51) Int. Cl.: C10M 175/06, B01D 61/14, B01D 17/04

(54) **Verfahren zur Aufarbeitung von Öl-in-Wasser-Emulsionen**
Method for the treatment of oil-in-water emulsions
Méthode pour le traitement d'émulsions huile-dans-eau

(30) Priorität: 03.07.1992 DE 4221936
(43) Veröffentlichungstag der Anmeldung: 12.01.1994
(73) Patentinhaber: BAYER AG, 51368 Leverkusen (DE)
(72) Erfinder: de Geus, Johannes, D-51379 Leverkusen (DE); Kehlenbach, Rolf, D-51469 Bergisch Gladbach (DE); Lehmann, Bernhard, Dipl.-Ing., D-52072 Aachen (DE)

(56) Entgegenhaltungen:
- EP-A- 0 333 141
- DE-A- 2 528 990
- DE-A- 3 002 111
- DE-A- 3 247 431
- DE-A- 3 831 976
- DE-A- 4 040 022

## Beschreibung

Die Vorliegende Erfindung betrifft ein besonders vorteilhaftes Verfahren zur Aufarbeitung von Öl-in-Wasser-Emulsionen, bei dem eine gut wiederverwendbare oder entsorgbare Wasserphase und eine gut wiederverwendbare oder entsorgbare Ölphase erhalten werden.

Bei vielen Gelegenheiten fallen Öl-in-Wasser-Emulsionen an, die entsorgt werden müssen. So fallen z.B. in der mechanischen Fertigung bei der Vorbehandlung, Bearbeitung und Reinigung von Serienteilen große Mengen ölhaltiger Abwässer an Diese Abwässer, die z.B. neben öligen Schmier- und Kühlschmierstoffen auch durch Öleintrag verunreinigte Bestandteile von Entfettungsbädern und Reinigern enthalten können, müssen so aufbereitet werden, daß ein Abwasser anfällt, das entsprechend den gesetzlichen Vorschriften in die Kanalisation oder einen Vorfluter eingeleitet werden kann und eine Ölphase, die einer wirtschaftlichen und umweltfreundlichen Nutzung zugeführt werden kann.

Die bisher bekannten Verfahren zur Aufarbeitung ölhaltiger Abwässer genügen diesen Anforderungen nur unvollkommen.

Die DE-OS 3 831 976 beschreibt ein Verfahren, gemäß dem eine Öl-in-Wasser-Emulsion zunächst mit einem organischen Spaltmittel gespalten, die dabei entstehende Wasserphase einer Mikro- und/oder Ultrafiltration unterworfen und das dabei anfallende Retentat (= Ölphase) in die zu spaltende Öl-in-Wasser-Emulsion zurückgeführt wird. Dabei wird eine Wasserphase erhalten (nach der Mikro-und/oder Ultrafiltration) und eine Ölphase (nach der Spaltung mit dem organischen Spaltmittel), die jeweils noch größere Mengen der jeweils anderen Phase enthalten. Sie sind deshalb nicht gut wiederverwendbar oder entsorgbar.

Die DE-OS 4 040 022 beschreibt ein Verfahren, gemäß dem zunächst die Spaltung einer Öl-in-Wasser-Emulsion vorgenommen wird (erste Spaltung). Die dabei anfallende Ölphase wird sodann mit organischen Spaltern einer zweiten Spaltung unterzogen, bei der 60-90 Gew.-% des in dieser Ölphase enthaltenen Wassers abgetrennt wird.

Es wurde nun ein Verfahren zur Aufarbeitung von Öl-in-Wasser-Emulsionen gefunden, bei dem man
a) eine Öl-in-Wasser-Emulsion zunächst mit Hilfe eines chemischen Spaltmittels einer ersten Spaltung unterwirft und
b) die dabei anfallende Wasserphase einer Mikro-, Nano- und/oder Ultrafiltration oder einer Umkehrosmose zuführt,
das dadurch gekennzeichnet ist, daß man
c) die Ölphase aus der ersten Spaltung mit der Ölphase aus der Mikro-, Nano-und/oder Ultrafiltration oder der Umkehrosmose vereinigt,
d) die so vereinigten Ölphasen einer zweiten Spaltung unterwirft, die als Hybridspaltung mit einem 2-Komponenten-Spaltmittel durchgeführt wird, bei dem die erste Komponente ein synthetisches Polymeres auf der Basis von Acrylamid, ein synthetisches Polymeres auf der Basis von Polyaminen und/oder Polyamidaminen, quaternierte Polyamine, quaternierte Polyamidamine und/oder Homopolymerisate von Dimethyldiallylammoniumchlorid und die zweite Komponente Polymere und/oder Oligomere aus Ethylenoxid und/oder 1,2-Propylenoxid, oxalkylierte Phenolharze, mit Diisocyanaten, Dicarbonsäuren, Formaldehyd und/oder Diglycidylether vernetzte Block-oder Mischpolymere von Ethylen- und 1,2-Propylenoxid, Polyurethane und/oder Alkylbenzolsulfonsäuresalze umfaßt, und
e) die aus der zweiten Spaltung erhaltene Wasserphase in die erste Spaltung zurückgeführt.

In die Stufe a) des erfindungsgemäßen Verfahrens können als chemische Spaltmittel z.B. wasserlösliche Polymere eingesetzt werden, wobei kationische Polymere gegenüber anionischen und nichtionischen Polymeren allgemein bevorzugt sind. In Frage kommen beispielsweise synthetische Polymere auf der Basis von Acrylamid, wobei reines Polyacrylamid nichtionische, Copolymere aus Acrylamid und Acrylat anionisch und Copolymere aus Acrylamid und kationischen Monomeren oder Oligomeren kationisch sind, weiterhin synthetische Polymere auf der Basis Polyaminen und Polyamidaminen, sowie quaternierte Polyamine und quaternierte Polyamidamine,
weiterhin Homopolymerisate von Dimethyldiallylammoniumchlorid, auch als DADMAC bezeichnet,
aber auch anorganische Spaltmittel, wie anorganische Metallsalze, z.B. von Magnesium, Natrium, Calcium, Eisen, Silizium, Aluminium und Cer, die in Form von Hydroxiden, Oxiden, Chloriden oder Sulfaten eingesetzt werden können. Bevorzugt sind dabei 2- und 3-wertige Salze.

Die in Stufe a) des erfindungsgemäßen Verfahrens anfallende Wasserphase enthält im allgemeinen Restkohlenwasserstoffe in Mengen von weniger als 100 mg/l.

In der Stufe b) des erfindungsgemäßen Verfahrens wird eine Mikrofiltration, eine Nanofiltration oder eine Ultrafiltration oder eine Kombination dieser Verfahren oder eine Umkehrosmose durchgeführt. Dabei können or-ganische oder anorganische Membranen verwendet werden. Anorganische Membranen sind im allgemeinen völlig unempfindlich gegen Spaltmittel, die in der in die Stufe b) des erfindungsgemäßen Verfahrens eingesetzten Wasserphasen enthalten sind. Bei organischen Membranen ist es vorteilhaft, wenn man Spaltmittel mit hohen Molekulargewichten eingesetzt und wenn das Einsatzmaterial keine freien Kationentenside enthält.

Die Stufen a) und b) sind als solche grundsätzlich bekannt.

Erfindungswesentlich sind die Stufen c) und d), also die Vereinigung der Ölphase aus der Stufe a) und der Ölphase (= Retentat) aus der Mikro-, Nano- und/oder Ultrafiltration oder Umkehrosmose und die Spaltung der so vereinigten Phase mit einem organischen Spaltmittel.

Die Stufe d) führt man in Form einer sogenannten Hybridspaltung durch, d.h. unter Zusatz von zwei verschiedenen Spaltmitteln.

Als erste Komponente für sogenannte Hybridspaltmittel kommen synthetische Polymere auf der Basis von Acrylamid in Frage, wobei reines Polyacrylamid nichtionisch, Copolymere aus Acrylamid und Acrylat anionisch und Copolymere aus Acrylamid und kationischen Monomeren oder Oligomeren kationisch sind, weiterhin sind synthetische Polymere auf der Basis von Polyaminen und Polyamidaminen, sowie quaternierte Polyamine und quaternierte Polyamidamine und Homopolymerisate von Dimethyldiallylammoniumchlorid, die auch als DADMAC bezeichnet werden.

Als zweite Komponente für sogenannte Hybridspalter kommen Polymere und/oder Oligomere aus Ethylenoxid und/oder 1,2-Propylenoxid, oxalkylierte Phenolharze, mit Diisocyanaten, Dicarbonsäuren, Formaldehyd und/oder Diglycidylether vernetzte Block- oder Mischpolymere von Ethylen- und 1,2-Propylenoxid, Polyetherurethane und/oder Alkylbenzolsulfonsäuresalze in Frage.

Geeignete Polymere von Ethylen- und/oder 1,2-Propylenoxid kann man beispielsweise durch Polyalkoxylierung niederer Alkohole, wie Methanol, Ethanol, Propanolen, Butanolen, Pentanolen oder Hexanolen, mit Ethylen-und/oder 1,2-Propylenoxid erhalten. Als Alkohole kommen hierbei auch Di- und Polyole in Frage, z.B. Propandiole, Butandiole, Neopentylglykol, andere Pentandiole, Hexandiole, Cyclohexandiole, 1,4-Bis-(hydroxymethyl)-cyclohexan, Perhydroxybisphenol A, Glycerin, Trimethylolethan, Trimethylolpropan, andere Hexantriole und Pentaerythrit. Auch niedere Amine, z.B. Ethylendiamin und Diethylentriamin können mit Ethylenoxid und/oder 1,2-Propylenoxid polyalkoxyliert werden, um geeignete Polymere zu erhalten. Es können sowohl Blockpolymere als auch Polymere mit statistischer Verteilung verschiedener Oxyalkylgruppen, sogenannte Mischpolymere, oder Mischformen dieser beiden Formen eingesetzt werden. Bevorzugt sind Blockpolymere aus Ethylen- und 1,2-Propylenoxid und solche Produkte, bei denen Alkohole zunächst mit einer Mischung aus Propylenoxid und 70 bis 90 Gew.-% der gesamten Menge des Ethylenoxids zu Mischpolymeren umgesetzt werden und hierauf die restlichen 10 bis 30 Gew.-% des Ethylenoxids eingebracht werden, so daß ein Polyether entsteht, der praktisch nur primäre OH-Endgruppen enthält. Bevorzugt sind Polymere von Ethylen und 1,2-Propylenoxid, die 40 bis 60 Gew.-% Ethylenoxid, bezogen auf die Summe Ethylenoxid + 1,2-Propylenoxid enthalten. Besonders bevorzugte Polyether sind aus gleichen Gewichtsmengen Ethylen- und 1,2-Propylenoxid aufgebaut. Bevorzugt sind weiterhin Polyether mit Molekulargewichten von 600 bis 6000, besonders bevorzugt solche mit Molekulargewichten von 1000 bis 5000.

Geeignete oxyalkylierte Phenolharze kann man beispielsweise durch Kondensation von Alkylphenolen mit Formaldehyd, Formalinlösung oder Paraformaldehyd und anschließender Alkoxylierung erhalten.

Geeignete, mit Diisocyanat, Dicarbonsäuren, Formaldehyd und/oder Diglycidylethern vernetzte Block- oder Mischpolymere von Ethylen- und/oder 1,2-Propylenoxid kann z.B. erhalten werden, wenn man einen bifunktionellen Polyether, bestehend z.B. aus 30 bis 90 Gew.-% 1,2-Propylenoxid und 70 bis 10 Gew.-% Ethylenoxid, mit einem mittleren Molekulargewicht von 2000 bis 20000, mit einem bifunktionellen Diisocyanat, einer bifunktionellen Carbonsäure, Formaldehyd und/oder einem bifunktionellen Diglycidylether umsetzt. Beispiele für geeignete Diisocyanate sind Hexamethylendiisocyanat, Cyclohexan-1,4-diisocyanat, 2,4- und 2,6-Propylendiisocyanat und deren Gemische, 1-Isocyanatomethyl-5-isocyanato-1,3,3-trimethylcyclohexan, 2,2,4- und 2,4,4-Trimethylhexamethylendiisocyanat-1,6, 1,5-Naphthalindiisocyanat, 1,3-Cyclopentylendiisocyanat, m-und p-Phenylendiisocyanat, 1,3- und 1,4-Xylylendiisocyanat, 3,3'-Dimethyl-4,4'-diphenylmethandiisocyanat, 4,4'-Diphenylmethan-diisocyanat, 3,3'-Dimethylbiphenylendiisocyanat, 4,4'-Biphenylendiisocyanat, Durendiisocyanat, 1-Phenoxy-2,4'-phenylendiisocyanat, 1-tert.-Butyl-2,4-phenylendiisocyanat, Methylen-bis-4,4'-cyclohexyldiisocyanat, 1-Chlor-2,4-phenylendiisocyanat und 4,4'-Diphenylether-diisocyanat. Beispiele für geeignete Bisglycidylether sind solche des Bisphenols A, sowie Reaktionsprodukte von Epichlorhydrin und Anilin und Reaktionsprodukte von Perhydrophthalsäure mit Epichlorhydrin. Beispiele für geeignete difunktionelle Carbonsäuren sind Oxalsäure, Malonsäure, Bernsteinsäure, Glutarsäure, Adipinsäure, Pimelinsäure, Suberinsäure, Maleinsäure, Fumarsäure und höhere gesättigte oder ungesättigte Dicarbonsäuren.

Geeignete vernetzte Block- oder Mischpolymere von Ethylen- und/oder 1,2-Propylenoxid sind beispielsweise verknüpfte und aminmodifizierte Polyalkylenoxide der allgemeinen Formel (I) 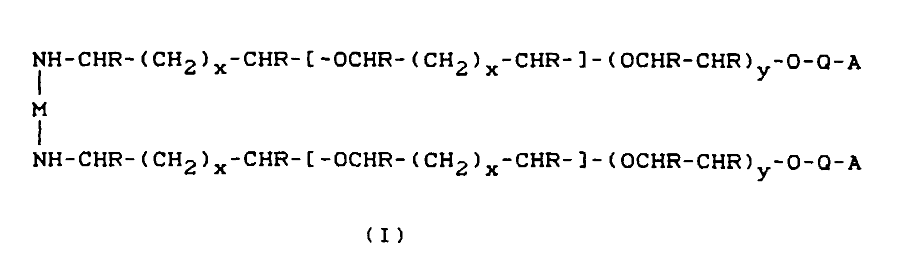 in der
- jedes R: unabhängig voneinander Wasserstoff oder einen C₁-C₂₀-Alkylrest bedeutet,
- jedes x: unabhängig voneinander Null oder eine ganze Zahl von 1 bis 12 bedeutet,
- jedes y: unabhängig voneinander Null oder eine ganze Zahl von 1 bis 120 bedeutet,
- jedes Q: unabhängig voneinander eine C₆-C₁₈-Arylen-, C₇-C₁₈-Aralkylen- oder C₂-C₁₈-Alkylengruppe bedeutet,
- jedes A: unabhängig voneinander Wasserstoff, Hydroxyl oder einen Rest der Formel (II)

-(OCHR-CHR)_{y}-[-OCHR-(CH₂)ₓ-CHR-]_{y}-OCHR-(CH₂)ₓ-CHR-NH₂ (II),

mit R, x und y wie oben angegeben bedeutet und
- M: den Rest eines Diisocyanats, eines Bisepoxids, einer Dicarbonsäure, eines Dicarbonsäuredihalogenids, eines Biscarbonsäureanhydrids, eines Diesters oder einer Dihalogenverbindung bedeutet, nachdem jeweils beide reaktive Gruppen mit einem Amin-Wasserstoffatom reagiert haben.

Bevorzugte vernetzte Block- und/oder Mischpolymere von Ethylen- und/oder 1,2-Propylenoxid kann man erhalten, indem man monofunktionelle Polymere von Ethylen-und/oder 1,2-Propylenoxid, mit Diisocyanaten, Bisglycidylethern oder Dicarbonsäuren, z.B. den weiter oben beschriebenen, umsetzt, und anschließend mit einem Polyalkylenpolyamin reagieren läßt.

Für das erfindungsgemäße Verfahren geeignete Polyetherurethane sind beispielsweise Harnstoff-modifizierte Polyetherurethane der Formel (III) 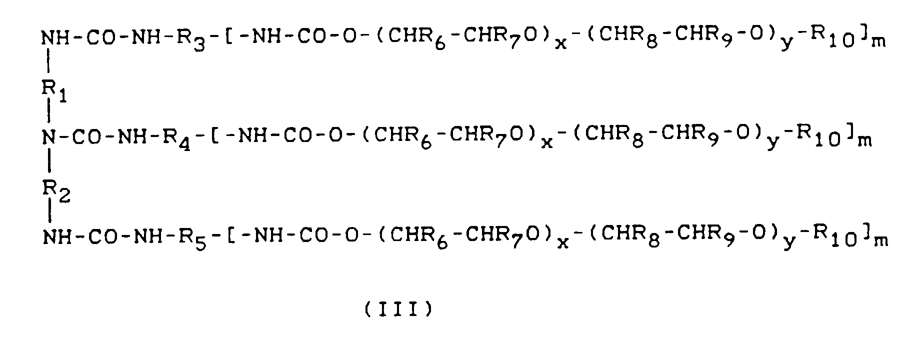 in der
- R₁ und R₂: unabhängig voneinander C₂-C₁₄-Cycloalkylen bedeuten,
- R₃, R₄ und R₅: unabhängig voneinander gegebenenfalls substituiertes Alkylen, Cycloalkylen oder Arylen bedeuten,
- R₆, R₇, R₈ und R₉: unabhangig voneinander Wasserstoff oder C₁-C₂₀-Alkyl bedeuten,
- R₁₀: C₁-C₁₈-Alkyl, C₆-C₁₈-Aryl; C₇-C₁₈-Aralkyl oder C₂-C₁₈-Alkenyl bedeutet und
- n: für die Zahlen 0 bis 50,
- m: für die Zahlen 1 bis 4,
- x: für die Zahlen 5 bis 100 und
- y: für die Zahlen 0 bis 100 stehen.

Bevorzugte Polyetherurethane entstehen durch Umsetzung von Polymeren von Ethylen- und/oder 1,2-Propylenoxid, die wie oben beschrieben erhalten wurden, mit einem bifunktionellen Isocyanat, wie es oben für die Herstellung vernetzter Block- oder Mischpolymere beschrieben ist, und einem Polyalkylenpolyamin.

Es können auch polyharnstoffmodifizierte Polyetherpolyurethane eingesetzt werden, die aus beispielsweise Ethylendiamin, Diethylentriamin, Triethylentetramin, 3-Ethylenpentamin, Pentaethylenhexamin, Polyethylenimin, 1,2- und 1,3-Propylendiamin, Dipropylentetramin, Butylendiamin, Hexamethylendiamin, 2,5-Diamino-2,5-dimethylhexan, 2,2,4- und 2,4,4-Trimethyl-1,6-hexandiamin, Cyclohexandiamin, Isophorondiamin, hydrierten Polyalkylendiaminen und hydrierten Diaminodiphenylmethanen hergestellt wurden.

Bevorzugt sind dabei Polyamine, die tri- oder höherfunktionell sind. Diethylentriamin, Triethylentetramin, Tetraethylenpentamin und Pentaethylenhexamine sind besonders bevorzugt.

Gut geeignet für die Herstellung Polyharnstoff-modifizierter Polyurethane sind auch technische Destillationsrückstände aus der Herstellung der genannten Oligoethylenamine. Diese Rückstände enthalten dann zusätzlich verzweigte und/oder cyclische Polyalkylenpolyamine.

Geeignete Alkylbenzolsulfonsäuresalze sind z.B. Salze von Alkylbenzolsulfonsäuren. Besonders bevorzugt sind Salze von Dodecylsulfonsäure.

Beim erfindungsgemäßen Verfahren erhält man eine als Brauchwasser geeignete oder in einen Vorfluter ablassbare Wasserphase aus der Mikro-, Nano- und/oder Ultrafiltration oder Umkehrosmose und eine, im allgemeinen nur wenig Wasser enthaltende Ölphase (aus der Stufe d)), die problemlos entsorgt oder recycled werden kann. Damit ist die erfindungsgemäße Aufarbeitung von Öl-in-Wasser-Emulsionen gegenüber den Verfahren des Standes der Technik deutlich besser und wirksamer.

Bei einer bevorzugten Ausführungsform des erfindungsgemäßen Verfahrens wird in der Stufe a) die zu behandelnde Öl-in-Wasser-Emulsion mit 50 bis 1000 ppm, vorzugsweise 100 bis 500 ppm eines organischen kationischen Spaltmittels versetzt und gegebenenfalls anschließend 50 bis 1000 ppm, vorzugsweise 100 bis 500 ppm eines anorganischen Spaltmittels zugefügt. Nach einer Aufrahmzeit von beispielsweise 1 bis 4 Stunden kann dann eine sehr ölreiche Ölschlammschicht oben von der Wasserphase abgetrennt werden.

Die Stufe d) des erfindungsgemäßen Verfahrens wird so durchgeführt, daß man ein Gemisch eines 2-Komponenten-Spalters in einer Menge von 5 bis 18000 ppm, vorzugsweise 10 bis 10000 ppm einsetzt. Bei der ersten Komponente handelt es sich dabei um synthetische Polymere auf der Basis Acrylamid, Polyaminen, Polyamidaminen, quaternierten Polyaminen, quaternierten Polyamidaminen und Dimethyldiallylammoniumchlorid und bei der zweiten Komponente um Polymere und/oder Oligomere aus Ethylenoxid und/oder 1,2-Propylenoxid, oxalkylierte Phenolharze, mit Diisocyanaten, Dicarbonsäuren, Formaldehyd und/oder Diglycidylether vernetzte Block- oder Mischpolymere von Ethylen- oder 1,2-Propylenoxid, Polyetherurethane und/oder Alkylbenzolsulfonsäuresalze. Die relative Menge von der ersten zur zweiten Komponente kann dabei beispielsweise im Bereich von: 10 bis 90 Gew.-% (bezogen auf den gesamten Spalter) liegen.

Die Stufe d) des erfindungsgemäßen Verfahrens kann man beispielsweise bei Temperaturen im Bereich von 0 bis 100°C durchführen. Vorzugsweise beträgt diese Temperatur 10 bis 80°C.

### Beispiele

### Beispiel 1

Eine Öl-in-Wasser-Emulsion aus einem Motorenwerk, die 28500 ppm Kohlenwasserstoffe enthielt und einen chemischen Sauerstoffbedarf (CSB) von 115000 ppm aufwies wurde mit 100 ppm Polyamidamin versetzt. Nach 3 Stunden bei 22°C wurde eine Ölphase abgetrennt, die noch 54 Gew.-% Wasser enthielt. Es hinterblieb eine Wasserphase, die einen Restgehalt an Kohlenwasserstoffen von 52 ppm enthielt und einen CSB von 9550 ppm aufwies. Die Wasserphase wurde einer Membranfiltration zugeführt, in der als Retentat eine Ölphase erhalten wurde, die noch 72 Gew.-% Wasser enthielt sowie eine Wasserphase, die nur noch 3 ppm Kohlenwasserstoffe enthielt und einen CSB von 7830 ppm aufwies. Die Wasserphase kann als Brauchwasser verwendet oder in einen Vorfluter abgegeben werden. Die Ölphase aus der Spaltung der Ausgangsemulsion und die Ölphase aus der Membranfiltration wurden vereinigt und einer sogenannten Hybridspaltung mit 8000 ppm Spalter, bestehend aus 3000 ppm eines Polyamidamins und 5000 ppm eines alkoxylierten Nonylphenol-Formaldehyd-Harz zugeführt. Nach 12 Stunden bei 60°C wurde eine Ölphase erhalten, die nur noch 0,5 Gew.-% Wasser enthielt und damit problemlos entsorgt werden konnte, sowie eine Wasserphase, die 160 ppm Kohlenwasserstoffe enthielt und einen CSB von 35000 ppm aufwies. Diese Wasserphase wurde in die Primärspaltung zurückgeführt.

### Beispiel 2

Eine Öl-in-Wasser-Emulsion aus einem Betrieb zur Herstellung von Elektromaschinen, die 3180 ppm Kohlenwasserstoffe enthielt und einen chemischen Sauerstoffbedarf (CSB) von 30410 ppm aufwies wurde mit 400 ppm einer Polyamidaminzubereitung versetzt. Nach 3 Stunden bei 20°C wurde eine Ölphase abgetrennt, die noch 48 Gew.-% Wasser enthielt. Es hinterblieb eine Wasserphase, die einen Restgehalt an Kohlenwasserstoffen von 44 ppm enthielt und einen CSB von 2480 ppm aufwies. Die Wasserphase wurde einer Membranfiltration zugeführt in der als Retentat eine Ölphase erhalten wurde, die noch 78 Gew.-% Wasser enthielt sowie eine Wasserphase, die nur noch 2 ppm Kohlenwasserstoffe enthielt und einen CSB von 1720 ppm aufwies. Die Wasserphase kann als Brauchwasser verwendet oder in einen Vorfluter abgegeben werden. Die Ölphase aus der Spaltung der Ausgangsemulsion und die Ölphase aus der Membranfiltration wurden vereinigt und einer sogenannten Hybridspaltung mit 4500 ppm Spalter, bestehend aus 2000 ppm einer Polyamidaminzubereitung und 2500 ppm einer Polyetherpolyolzubereitung zugeführt. Nach 24 Stunden bei 50°C wurde eine Ölphase erhalten, die nur noch 0,8 Gew.-% Wasser enthielt und damit problemlos entsorgt werden konnte, sowie eine Wasserphase, die 82 ppm Kohlenwasserstoffe enthielt und einen CSB von 16700 ppm aufwies. Diese Wasserphase wurde in die Primärspaltung zurückgeführt.

### Beispiel 3

Eine Öl-in-Wasser-Emulsion aus einem Automobilwerk, die 830 ppm Kohlenwasserstoffe enthielt und einen chemischen Sauerstoffbedarf (CSB) von 3800 ppm aufwies wurde mit 80 ppm eines Polyaminsalzes versetzt. Nach 1 Stunde bei 20°C wurde eine Ölphase abgetrennt, die noch 37 Gew.-% Wasser enthielt. Es hinterblieb eine Wasserphase, die einen Restgehalt an Kohlenwasserstoffen von 42 ppm enthielt und einen CSB von 1390 ppm aufwies. Die Wasserphase wurde einer Membranfiltration zugeführt, in der als Retentat eine Ölphase erhalten wurde, die noch 68 Gew.-% Wasser enthielt sowie eine Wasserphase, die nur noch 2 ppm Kohlenwasserstoffe enthielt und einen CSB von 980 ppm aufwies. Die Wasserphase kann als Brauchwasser verwendet oder in einen Vorfluter abgegeben werden. Die Ölphase aus der Spaltung der Ausgangsemulsion und die Ölphase aus der Membranfiltration wurden vereinigt und einer sogenannten Hybridspaltung mit 5000 ppm Spalter, bestehend aus 1000 ppm einer Polyaminzubereitung und 4000 ppm eines harzmodifizierten Polyethers zugeführt. Nach 6 Stunden bei 70°C wurde eine Ölphase erhalten, die nur noch 0,4 Gew.-% Wasser enthielt und damit problemlos entsorgt werden konnte, sowie eine Wasserphase, die 98 ppm Kohlenwasserstoffe enthielt und einen CSB von 5700 ppm aufwies. Diese Wasserphase wurde in die Primärspaltung zurückgeführt.

## Patentansprüche

1. Verfahren zur Aufarbeitung von Öl-in-Wasser-Emulsionen, bei dem man
a) eine Öl-in-Wasser-Emulsion zunächst mit Hilfe eines chemischen Spaltmittels einer ersten Spaltung unterwirft und
b) die dabei anfallende Wasserphase einer Mikro-, Nano- und/oder Ultrafiltration oder einer Umkehrosmose zuführt,
dadurch gekennzeichnet, daß man
c) die Ölphase aus der ersten Spaltung mit der Ölphase aus der Mikro-, Nano- und/oder Ultrafiltration oder der Umkehrosmose vereinigt,
d) die so vereinigten Ölphasen einer zweiten Spaltung unterwirft, die als Hybridspaltung mit einem 2-Komponenten-Spaltmittel durchgeführt wird, bei dem die erste Komponente ein synthetisches Polymeres auf der Basis von Acrylamid, ein synthetisches Polymeres auf der Basis von Polyaminen und/oder Polyamidaminen, quaternierte Polyamine, quaternierte Polyamidamine und/oder Homopolymerisate von Dimethyldiallylammoniumchlorid und die zweite Komponente Polymere und/oder Oligomere aus Ethylenoxid und/oder 1,2-Propylenoxid, oxalkylierte Phenolharze, mit Diisocyanaten, Dicarbonsäuren, Formaldehyd und/oder Diglycidylether vernetzte Block- oder Mischpolymere von Ethylen- und 1,2-Propylenoxid, Polyurethane und/oder Alkylbenzolsulfonsäuresalze umfaßt,und
e) die aus der zweiten Spaltung erhaltene Wasserphase in die erste Spaltung zurückführt.

2. Verfahren nach Anspruch 1, dadurch gekennzeichnet, daß man in Stufe a) die zu behandelnde Öl-in-Wasser-Emulsion mit 5 bis 1000 ppm eines organischen kationischen Spaltmittels versetzt.

3. Verfahren nach Ansprüchen 1 und 2, dadurch gekennzeichnet, daß man in Stufe d) 5 bis 18 000 ppm eines 2-Komponenten-Spalters einsetzt.

4. Verfahren nach Anspruch 3, dadurch gekennzeichnet, daß die relative Menge der ersten zur zweiten Komponente im Bereich von 10 bis 90 Gew.-% (bezogen auf den gesamten Spalter) liegt.

5. Verfahren nach Ansprüchen 1 bis 4, dadurch gekennzeichnet, daß man die Stufe d) bei Temperaturen im Bereich von 0 bis 100°C durchführt.

## Claims

1. Process for reprocessing oil-in-water emulsions, in which
a) an oil-in-water emulsion is first subjected with the aid of a chemical emulsion breaker to a first breaking and
b) the resulting water phase is fed to a micro-, nano- and/or ultrafiltration or a reverse osmosis,
characterised in that
c) the oil phase from the first breaking is combined with the oil phase from the micro-, nano-and/or ultrafiltration or the reverse osmosis,
d) the oil phases thus combined are subjected to a second breaking which is carried out as a hybrid breakdown using a 2-component emulsion breaker, in which the first component comprises a synthetic polymer based on acrylamide, a synthetic polymer based on polyamines and/or polyamideamines, quaternised polyamines, quaternised polyamideamines and/or homopolymers of dimethyldiallylammonium chloride and the second component comprises polymers and/or oligomers of ethylene oxide and/or 1,2-propylene oxide, alkoxylated phenol resins, block or random copolymers of ethylene oxide and 1,2-propylene oxide crosslinked using diisocyanates, dicarboxylic acids, formaldehyde and/or diglycidyl ethers, polyurethanes and/or alkylbenzenesulphonic acid salts, and.
e) the water phase obtained from the second breaking is returned to the first breaking

2. Process according to Claim 1, characterised in that, in stage a), 5 to 1000 ppm of an organic cationic emulsion breaker are added to the oil-in-water emulsion to be treated.

3. Process according to Claims 1 and 2, characterised in that, in stage d), 5 to 18,000 ppm of a 2-component emulsion breaker are used.

4. Process according to Claim 3, characterised in that the relative amount of the first component to the second component is in the range from 10 to 90% by weight (based on the total emulsion breaker).

5. Process according to Claims 1 to 4, characterised in that stage d) is carried out at temperatures in the range from 0 to 100°C.

## Revendications

1. Procédé pour traiter des émulsions huile-dans-l'eau, dans lequel
a) on soumet d'abord une émulsion huile-dans-l'eau à une première rupture à l'aide d'un additif chimique et
b) on envoie la phase aqueuse obtenue dans cette rupture à une micro-, nano- et/ou ultra-filtration ou à une osmose inverse,
caractérisé en ce que
c) on combine la phase huileuse obtenue à la première rupture avec la phase huileuse obtenue à la micro-, nano- et/ou ultra-filtration ou à l'osmose inverse,
d) on soumet ces phases huileuses combinées à une deuxième rupture, une sorte de rupture "hybride" à l'aide d'un additif à deux composants dans lequel le premier composant consiste en un polymère synthétique à base de l'acrylamide, un polymère synthétique à base de polyamines et/ou de polyamidamines, des polyamines quaternisées, des polyamidamines quaternisées et/ou des homopolymères du chlorure de diméthyldiallylammonium et le second composant coniste en polymères et/ou oligomères de l'oxyde d'éthylène et/ou de l'oxyde de 1,2-propylène, en résines phénoliques oxyalkylées, en polymères séquencés ou copolymères de l'oxyde d'éthylène et de l'oxyde de 1,2-propylène réticulés par des diisocyanates, des acides dicarboxyliques, le formaldéhyde et/ou des éthers diglicidyliques, en polyuréthannes et/ou en sels d'acides alkylbenzènesulfoniques et
e) on recycle à la première rupture la phase aqueuse obtenue à la deuxième rupture.

2. Procédé selon la revendication 1, caractérisé en ce que, au stade a), on ajoute à l'émulsion huile-dans-l'eau à traiter 5 à 1000 ppm d'un additif de rupture organique cationique.

3. Procédé selon les revendications 1 et 2, caractérisé en ce que, au stade d), on utilise 5 à 18 000 ppm d'un additif de rupture à deux composants.

4. Procédé selon la revendication 3, caractérisé en ce que les proportions relatives entre le premier et le second composant se situent dans l'intervalle de 10 à 90 % en poids (sur l'additif total).

5. Procédé selon les revendications 1 à 4, caractérisé en ce que, au stade d), on respecte des températures dans l'intervalle de 0 à 100°C.
